# EUROPEAN PATENT SPECIFICATION

(11) **EP 3 389 219 B1**
(45) Date of publication and mention of the grant of the patent: **20.05.2020**
(21) Application number: 16872315.3
(22) Date of filing: 28.11.2016
(51) Int. Cl.: H04L 12/24, H04L 29/08

(54) **ACCESS REQUEST CONVERSION METHOD AND DEVICE**
VERFAHREN UND VORRICHTUNG ZUR UMWANDLUNG VON ZUGRIFFSANFORDERUNGEN
PROCÉDÉ ET DISPOSITIF DE CONVERSION DE REQUÊTE D'ACCÈS

(30) Priority: 08.12.2015 CN 201510896122
(43) Date of publication of application: 17.10.2018
(73) Proprietor: Alibaba Group Holding Limited, Grand Cayman (KY)
(72) Inventor: LIU, Xin, Hangzhou Zhejiang 311121 (CN); HE, Zhaowei, Hangzhou Zhejiang 311121 (CN); CHEN, Tingliang, Hangzhou Zhejiang 311121 (CN)
(74) Representative: Finnegan Europe LLP
(86) International application number: PCT/CN2016/107408
(87) International publication number: WO 2017/097123

(56) References cited:
- WO-A2-03/073700
- CN-A- 101 674 236
- CN-A- 102 056 333
- US-A1- 2014 082 170
- JIAWEI JIANG ET AL: "A predictive dynamic load balancing algorithm with service differentiation", 2013 15TH IEEE INTERNATIONAL CONFERENCE ON COMMUNICATION TECHNOLOGY, IEEE, 17 November 2013 (2013-11-17), pages 372-377, XP032597398, DOI: 10.1109/ICCT.2013.6820403 [retrieved on 2014-05-22]
- "Protocol specification for Content Delivery over NGSON ; _11.07.26__ProtocolSpecificationonNGSON_KT ", IEEE DRAFT; _11.07.26__PROTOCOLSPECIFICATIONONNGSON_KT , IEEE-SA, PISCATAWAY, NJ USA, vol. ngson, 18 August 2011 (2011-08-18), pages 1-6, XP068030012, [retrieved on 2011-08-18]
- DIRK EDDELBUETTEL ET AL: "RProtoBuf: Efficient Cross-Language Data Serialization in R", ARXIV.ORG, CORNELL UNIVERSITY LIBRARY, 201 OLIN LIBRARY CORNELL UNIVERSITY ITHACA, NY 14853, 29 January 2014 (2014-01-29), XP080004231, DOI: 10.18637/JSS.V071.I02

## Description

### Technical Field

The present invention relates to data development, and in particular, to an access request conversion method and apparatus.

### Background Art

A plurality of modules are required in big data platform systems to achieve their respective functions. The modules need to be designed and developed by different developers. The developers design various types of modular interfaces to meet functional and performance requirements. For example, for Remote Procedure Call Protocols (RPC), custom binary protocols, and the like, the developers need to perform development according to the interaction patterns of all protocols, resulting in a high degree of coupling among the modules.

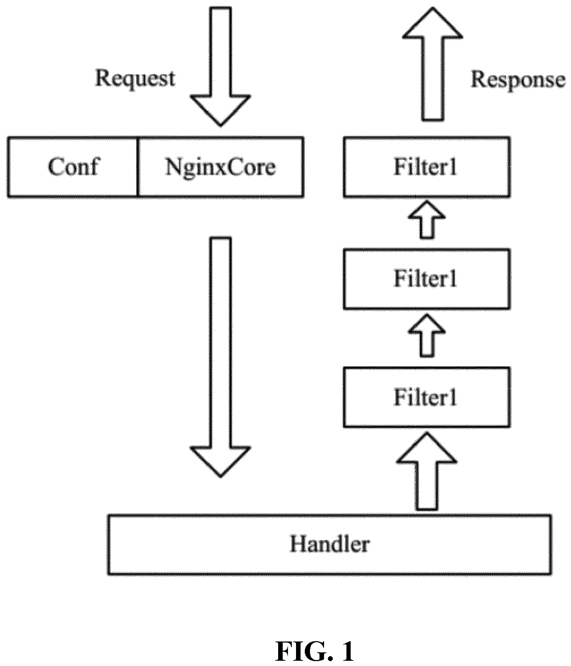

In order to reduce the degree of coupling among the modules, some intermediate protocol conversion apparatuses such as Nginx Modules and ServiceMix are used in big data platforms. In an Nginx Module system as shown in FIG. 1, when a request is received, the received request is mapped into a local data table by searching a configuration file, to trigger an instruction stored in the local data table to instruct a handle module and a plurality of filter modules to complete their respective work, thus returning a Response. The handler module is responsible for processing the request and generating response content. The filter modules process the response content. Although a number of protocols can be supported in a ServiceMix system, protocol extension can also be performed as required.

However, in the Nginx Module system and the ServiceMix system, the dependency between the systems is relatively high, and cluster management mechanism functions such as load balance and failover for the modules in the systems are relatively weak.

Jiawei Jiang et al., "A Predictive Dynamic Load Balancing Algorithm with Service Differentiation," National Network New Media Engineering Research Center, ICCT 2013, 17 November 2013, discloses a predictive dynamic load balancing algorithm which takes services types into consideration.

US 2014/082170 discloses a system and method for small batch processing of usage requests.

CN102056333discloses selecting a WAP proxy server from a server group for offering a service for a service type according to a service access request.

### Summary of the Invention

Embodiments of the present invention provide an access request conversion method and apparatus, to solve the dependency between systems and improve the systems' management mechanism function for modules.

In a first aspect, the present invention provides an access request conversion method according to claim 1.

In a second aspect, an embodiment of the present invention provides an apparatus according to claim 8.

Based on the access request conversion method and apparatus provided in the embodiments of the present invention, the target service type of a received access request is determined according to the access request, the access request is parsed into a data structure corresponding to the target service type, and the data structure is provided to a corresponding server side, thus achieving the function of a unified request interface for multiple networks in a big data platform environment, decoupling the dependency between systems, and improving the systems' management mechanism function for modules.

### Brief Description of the Drawings

In order to illustrate the technical solutions according to the embodiments of the present invention more clearly, the accompanying drawings to be used in the embodiments of the present invention are introduced briefly below. It is apparent that the accompanying drawings described below are only some embodiments of the present invention. Persons of ordinary skill in the art can further obtain other drawings according to the accompanying drawings without any creative efforts.
FIG. 1 is a schematic structural diagram of an Nginx Lua system in the prior art;
FIG. 2 is a flowchart of an access request conversion method according to an embodiment of the present application;
FIG. 3 is a schematic structural diagram of an apparatus according to an embodiment of the present application;
FIG. 4 is a flowchart of an access request conversion method according to another embodiment of the present application; and
FIG. 5 is a schematic structural diagram of an apparatus according to another embodiment of the present application.

### Detailed Description

The technical solutions in the embodiments of the present invention are clearly and fully described below with reference to the accompanying drawings in the embodiments of the present invention. It is apparent that the embodiments described are only a part rather than all of the embodiments of the present invention. All other embodiments obtained by persons of ordinary skill in the art based on the embodiments of the present invention without any creative efforts shall fall within the protection scope of the present invention.

The access request conversion method and apparatus provided in the embodiments of the present application are applicable to a big data platform scenario. By receiving an access request which uses a protocol and is sent by the client side, for example, an access request using the http/https protocol, the access request conversion apparatus can access a server side that supports a plurality of protocols such as an RPC and a custom binary protocol, to meet the client side's requirement for a target resource.

It should be noted that, in the embodiments of the present application, the client side refers to a program that corresponds to the server side and provides local services to customers and can also be referred to as Client or user side. The client side is generally installed on a common customer service machine. The client side can interact with another client side through different protocols such as the socket protocol, the http/https protocol, and the RPC protocol. The access request is a request message generated when the client side interacts with the server side in a protocol request-response pattern. The server side is a server in a broad sense and is a computer system that can provide services to other devices in a network. The server side needs to make a response according to a received access request and perform processing. The server side has the ability to undertake access service and ensure the quality of the service. The server side may include a database server side, an application server side, a Web server side, and the like according to different service types.

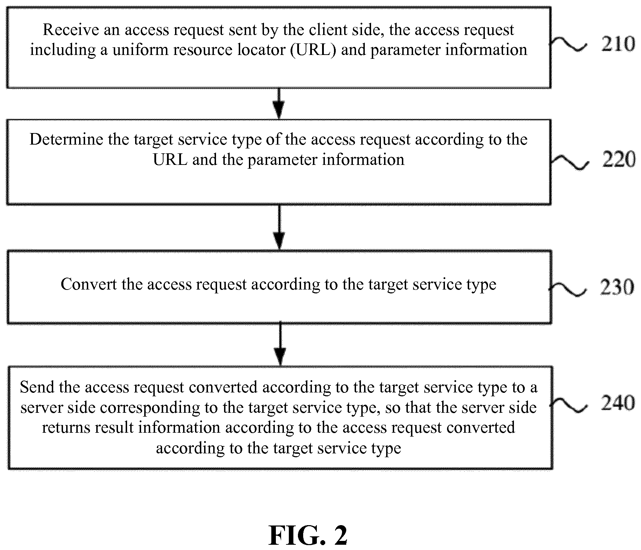

For ease of description, the technical solution in the embodiments of the present application is described in detail with reference to FIG. 2. It should be understood that this is merely an example for describing the technical solution in the embodiments of the present application and does not pose any limitation to the embodiments of the present application.

FIG. 2 is a flowchart of an access request conversion method according to an embodiment of the present application. The method may be performed by a device, a system, or an apparatus that has a processing capability, for example, an intermediate protocol conversion apparatus. As shown in FIG. 2, the method specifically includes the following steps.

Step 210. An access request sent by the client side is received, the access request including a Uniform Resource Locator (URL) and parameter information.

The access request is a request message sent by the client side through a protocol, and is, for example, an http request. The request message may include a URL, parameter information, and a message body. The URL is a concise representation of the location and access method of a resource available on the Internet and is the address of a standard resource on the Internet. Each file on the Internet has a unique URL. Information in the URL includes resource location information and the processing manner of the client side. The parameter information may include a parameter GET for acquiring a corresponding resource identified by the URL, a parameter POST for attaching new data after the resource identified by the URL, a response message header HEAD for access request acquisition of the resource identified by the URL, a security-information-related authentication parameter of the access request, or other related parameters.

Optionally, after the access request is received, the access request is parsed such that a URL, parameter information, a message body, and other corresponding information are acquired from the access request.

After the corresponding information in the access request is acquired, the method may include the following steps:
performing predefined processing on the access request, the predefined processing including authentication of the access request; and determining the target service type of the access request according to the URL and the parameter information when the authentication is successful.

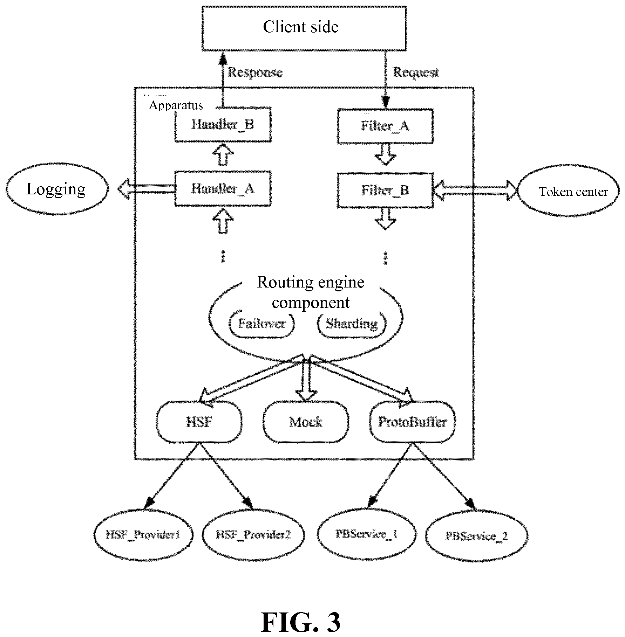

Specifically, the step of performing predefined processing on the access request may include processing such as predefined data modification and authentication of the access request. For example, the step can be implemented by using a Filter component that is registered in the apparatus and is custom-developed by a developer, as shown in FIG. 3.

In the embodiment of the present application, the authentication of the access request may include: matching authentication parameter information in the access request with token information of a token center, wherein the authentication of the access request is successful when the authentication parameter information matches the token information.

Specifically, the Filter component sends the access request to a token center, so that the token center performs calculations according to information in the access request to obtain token information and matches the token information with the authentication parameter information in the access request. When the token information matches the authentication parameter information, the authentication of the access request is successful, indicating that the access request passes valid authentication. Otherwise, the access request does not pass the authentication.

When the access request does not pass the authentication, an information error is returned to the client side to indicate to the user that the access request does not pass the authentication, thus facilitating acquisition of information by the client side. When the access request passes the authentication, step 220 is performed.

Step 220. The target service type of the access request is determined according to the URL and the parameter information.

Specifically, in the embodiment of the present application, the target service type is a protocol type that can be supported by the server side, for example, HSF, Mock and Protobuffer. The protocol can also be extended to include other protocol types, to which no limitation is made in the embodiment of the present application.

In the embodiment of the present application, the step of determining the target service type of the access request according to the URL and the parameter information specifically includes:
determining, according to the URL, whether a service corresponding to the URL path exists; and
determining the target service type of the access request according to the parameter information when a service corresponding to the URL path exists.

Specifically, the apparatus can determine whether a service corresponding to the URL path exists by looking up a table. For example, Table 1 can be searched according to the URL path to determine whether a corresponding path exists in the table. For example, the URL path in the access request is path 1, and it is determined whether the path 1 exists by looking up the table. When the URL path in the access request exists in the table, it is determined that a service corresponding to the URL path exists. Otherwise, the service corresponding to the URL path does not exist.

**Table 1**

| URL | Target service type |
|---|---|
| Path 1 | HSF |
| Path 2 | Mock |
| Path 3 | Protobuffer |

It should be understood that, in the embodiment of the present application, Table 1 is merely intended to describe the technical solution of the present application in detail. The content in Table 1 does not pose any limitation to the embodiment of the present application, and no limitation is made to the content in the embodiment of the present application.

When it is determined according to the URL that a service corresponding to the URL path exists, the target service type into which the access request is converted is determined according to the parameter information. For example, the target service type can be determined by looking up a table. As shown in Table 1, based on path 1, which has been found to be present, the queried corresponding target service type is HSF. Specifically, the target service can be determined by a routing engine component, as shown in FIG. 3. The routing engine component may be a program that is developed by a developer and has the function of determining the target service type according to a URL and parameter information in an access request, and includes a sharding component and a failover component. The sharding component is configured to distribute the access request according to the determined target service type based on a failover strategy and a load balance strategy configured by the server sides (HSF_Provider1, HSF_Provider2, PBService_1 and PBService_2) of the access request, and send the access request to an engine component of the corresponding target service type, such as HSF, Mock and Protobuffer. Failover means that when data or a file in the apparatus is damaged or lost, the apparatus can automatically restore the damaged or lost file or data to a state before the accident occurred, to ensure the normal running of the apparatus. Load balance means distributing the access request to server sides such as HSF_Provider1, HSF_Provider2, PBService_1 and PBService_2 corresponding to a plurality of engine components for processing, so that the task of processing the access request is completed by the server sides together.

In the embodiment of the present application, the failover component has the function of recording the configuration of a server side, so that a routing engine can distribute the access request to an engine component of the corresponding target service type by querying the configuration of the server side in the failover component, so as to implement load balancing. In other words, before the step of sending the access request converted according to the target service type to a server side corresponding to the target service type, the method further includes: querying, according to the target service type, the server side which corresponds to the target service type and is recorded in the failover component, so that information of the access request is distributed to the corresponding server side according to the target service type and according to the configuration of the server side, to implement load balancing.

In the embodiment of the present application, when the apparatus determines, according to the URL, whether a service corresponding to the URL path exists or determines the target service type of the access request according to the parameter information, if a service corresponding to the URL path or the target service type does not exist, an information error will be returned to the client side to indicate the reason for the error, so that a user using the client side can be aware of the reason for the error.

Step 230. The access request is converted according to the target service type.

Specifically, when receiving the access request, an engine component converts the data structure of the received access request according to the target service type into a protocol type that can be supported by the server side. For example, as shown in FIG. 3, the access request can be converted by an engine component HSF, Mock or Protobuffer into a protocol type that can be supported by HSF_Provider1, HSF_Provider2, a Mock server side, PBService_1, or PBService_2. Here, PBService is an abbreviation of Protobuffer Service.

Step 240. The access request converted according to the target service type is sent to a server side corresponding to the target service type, so that the server side returns result information according to the access request converted according to the target service type.

Specifically, when the engine component converts the access request into the access request of the corresponding target service type, the engine component sends the converted access request to a corresponding server side respectively, so that the corresponding server side makes a response according to the corresponding access request and returns result information. The result information is resource information for the access request of the client side, and may be text, an image, a video, or other information.

In the embodiment of the present application, the method may further include: receiving the result information; processing the result information; and sending the processed result information to the client side, so that the client side performs a corresponding operation according to the processed result information.

Specifically, the engine component receives the result information sent by the server side and sends it to the routing engine component. The routing engine component structures the data of the received result information sent by different engine components into a unified data structure and returns it to a Handler component as described in FIG. 3. This component is a program that is developed by a developer and has the function of processing the returned result information into a data structure that can be received by the client side. For example, the component can perform compression, logging, data modification, and masking on the result information for the access request. By means of logging, it is possible to log information about the time from the moment when the access request is sent from the client side to the moment when the result information for the access request is returned to the client side. By means of masking, data transformation is performed on sensitive information in the result information according to a masking rule, so that sensitive private data can be reliably protected. In the embodiment of the present application, a plurality of Handler components can be set as required. In the process of processing the result information, the result information can be sequentially transmitted to a next Handler component, so that data of the result information can be flexibly and transparently changed.

In the embodiment of the present application, an example of an access request is 1+1=?, the returned result is 2, and the Handler component processes the returned result of 2 according to a predefined processing manner. For example, the handler component compresses the returned result, so that the client side performs corresponding processing according to the information after receiving the information. When the returned result is another number, for example, 3, the Handler component can send the returned result of 3 and additional result error information to the client side according to a predefined processing manner.

Based on the access request conversion method provided in the embodiment of the present application, the target service type of a received access request is determined according to the access request, the access request is parsed into a data structure corresponding to the target service type, and the data structure is provided to a corresponding server side, thus achieving the function of a unified request interface for multiple networks in a big data platform environment, decoupling the dependency between systems, and improving the systems' management mechanism function for modules.

It should be understood that, in the embodiment of the present application, the Filter component and the Handler component in FIG. 3 can be loaded in a plug-in manner. A developer can develop data modification, authentication, statistics, compression, or other functions as required based on the access request, that is, an http request. A user can register with Filter component and the handler component links by providing basic information. When the apparatus is turned on, the system will dynamically load the components having predefined functions.

In the embodiment of the present application, the apparatus will convert the access request into a universal intermediate data structure, so that communication protocols supported by different server sides can be joined. The universal data structure can be automatically converted into a fixed structure by using various developed engine components, and a developer can flexibly develop a system that supports specific protocols. Unlike Nginx Lua development, there is no need to implement a plurality of data structures in the Filter component and the Handler component in the embodiment of the present application, so the development cycle is shortened. Likewise, there is no need for an in-depth understanding of the data structure of the system, as is necessary in Nginx Lua development, so development costs are reduced.

It should be noted that, in the embodiment of the present application, the client side may provide an access request using a protocol such as http/https, socket, or RPC (such as HSF and Protobuffer). The server side can support protocols such as HSF, Mock, and Protobuffer. The client side and the server side can further support other protocols, to which no limitation is made in the embodiment of the present application.

It should be further noted that the embodiment of the present application can be implemented in the Jave language.

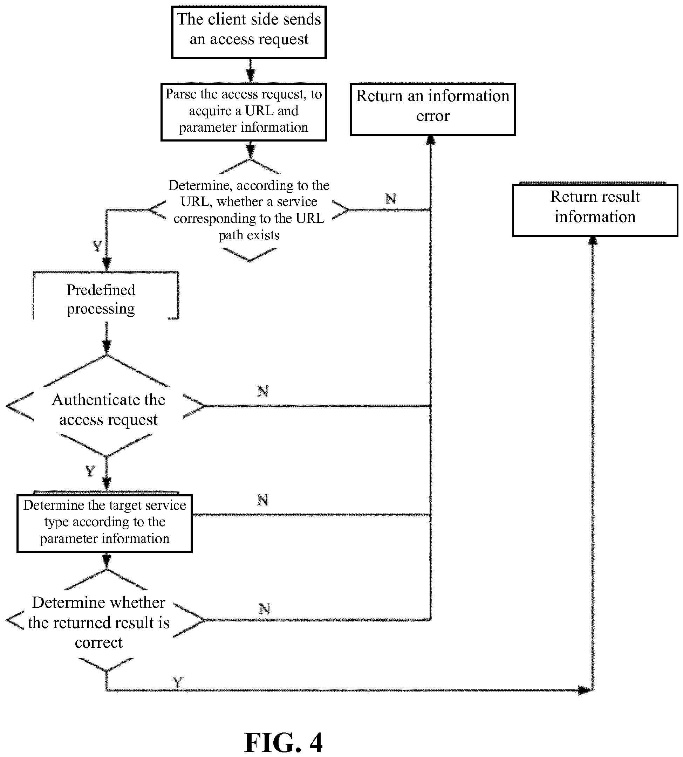

Optionally, in another embodiment of the present application, the step of determining, according to the URL, whether a service corresponding to the URL path exists can be first performed in the method after the apparatus acquires corresponding information in the access request, as shown in FIG. 4, so that the client side can acquire resource information required by the access request more rapidly.

When it is determined that a service corresponding to the URL path exists, corresponding preprocessing and authentication are performed on the access request, and when the authentication of the access request is successful, the apparatus performs the step of determining the target service type of the access request according to the parameter information.

The specific step can be implemented through step 220 in FIG. 2, which is not further described here for simplicity.

It should be noted that, in the embodiment of the present application, when the apparatus determines, according to the URL, whether a service corresponding to the URL path exists or determines the target service type of the access request according to the parameter information, if a service corresponding to the URL path or the target service type does not exist, an information error will be returned to the client side to indicate the reason for the error, so that a user using the client side can be aware of the reason for the error.

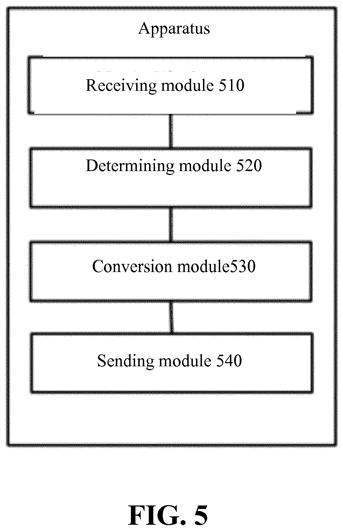

The access request conversion method according to the embodiments of the present application has been described in detail above with reference to FIG. 2 to FIG. 4. The apparatus provided in the embodiments of the present application will be described in detail in the following with reference to FIG. 5.

FIG. 5 is a schematic structural diagram of an apparatus according to the present application. As shown in FIG. 5, the apparatus includes:
a receiving module 510, a determining module 520, a conversion module 530, and a sending module 540. The receiving module 510 is configured to receive an access request sent by the client side, the access request including a uniform resource locator (URL) and parameter information.

The determining module 520 is configured to determine the target service type of the access request according to the URL and the parameter information.

The conversion module 530 is configured to convert the access request according to the target service type.

The sending module 540 is configured to send the access request converted according to the target service type to a server side corresponding to the target service type, so that the server side returns result information according to the access request converted according to the target service type.

Optionally, as another embodiment of the present application, the determining module 520 is further configured to: perform predefined processing on the access request, the predefined processing including authentication of the access request; and determine the target service type of the access request according to the URL and the parameter information when the authentication is successful.

Optionally, as another embodiment of the present application, the determining module 520 is specifically configured to: match authentication parameter information in the access request with token information of a token center, wherein the authentication of the access request is successful when the authentication parameter information matches the token information.

Optionally, as another embodiment of the present application, the determining module is specifically configured to: determine, according to the URL, whether a service corresponding to the URL path exists; and determine the target service type of the access request according to the parameter information when a service corresponding to the URL path exists.

Optionally, as another embodiment of the present application, the determining module 520 is configured to determine, according to the URL, whether a service corresponding to the URL path exists, to determine the target service type of the access request according to the parameter information when the authentication of the access request is successful.

Optionally, as another embodiment of the present application, the receiving module 510 is further configured to receive the result information;
the processing module is further configured to process the result information; and
the sending module 540 is further configured to send the processed result information to the client side, so that the client side performs a corresponding operation according to the processed result information.

The processing here includes any one or more of data modification, compression, and masking.

Optionally, as another embodiment of the present application, the apparatus further includes a query module configured to query, according to the target service type, the server side which corresponds to the target service type and is recorded in a failover component.

Based on the apparatus provided in the embodiment of the present application, the target service type of a received access request is determined according to the access request, the access request is parsed into a data structure corresponding to the target service type, and the data structure is provided to a corresponding server side, thus achieving the function of a unified request interface for multiple networks in a big data platform environment, decoupling the dependency between systems, and improving the systems' management mechanism function for modules.

It should be noted that, in the embodiment of the present application, the foregoing and other operations and/or functions of the modules in the apparatus provided in FIG. 5 can be implemented by using the modules of the apparatus in FIG. 3, and corresponding processes of the methods in FIG. 2 and FIG. 4 can be implemented respectively, which are not further described here for simplicity.

Professionals should be further aware that the units and algorithm steps in the examples described in combination with the embodiments disclosed herein may be implemented by electronic hardware, computer software, or a combination of computer software and electronic hardware. In order to clearly illustrate the interchangeability between hardware and software, the compositions and steps of the examples have been generally described in the above description according to functions. Whether the functions are performed in a hardware or software manner depends on the particular applications and design constraints of the technical solutions. For each specific application, those skilled in the art may implement the described functions by using different methods; however, such implementation shall not be construed as going beyond the scope of the present invention.

The steps of the method or algorithm described in combination with the embodiments disclosed herein can be implemented by using hardware, a processor-executed software module, or a combination of both. The software module can be disposed in a random access memory (RAM), a memory, a read only memory (ROM), an electrically programmable ROM, an electrically erasable programmable ROM, a register, a hard disk, a removable disk, a CD-ROM, or any other form of storage media well known in the technical field.

The specific implementation manners described above further describe the objectives, the technical solutions, and the beneficial effects of the present invention in detail. It should be understood that the above description is merely specific implementation manners of the present invention and is not intended to limit the protection scope of the present invention which is defined by the appended claims.

## Claims

1. An access request conversion method, comprising:
receiving an access request sent by a client side, the access request comprising a uniform resource locator, URL, ' and parameter information;
determining a target service type of the access request according to the URL and the parameter information;
converting the access request according to the target service type;
querying, according to the target service type, a server side configuration which corresponds to the target service type and is recorded in a failover component; and
sending the access request converted according to the target service type to the server side corresponding to the target service type according to the server side configuration to allow the server side to return result information according to the access request converted according to the target service type.

2. The method according to claim 1, wherein after the step of receiving the access request sent by the client side, the method further comprises:
performing predefined processing on the access request, the predefined processing comprising authentication of the access request; and
determining the target service type of the access request according to the URL and the parameter information when the authentication is successful.

3. The method according to claim 2, wherein the authentication of the access request comprises:
matching authentication parameter information in the access request with token information of a token center,
wherein the authentication of the access request is successful when the authentication parameter information matches the token information.

4. The method according to any of claims 1 to 3, wherein the step of determining the target service type of the access request according to the URL and the parameter information comprises:
determining, according to the URL, whether a service corresponding to the URL path exists; and
determining the target service type of the access request according to the parameter information when the service corresponding to the URL path exists.

5. The method according to claim 2, wherein before the step of performing predefined processing on the access request, the method comprises:
determining, according to the URL, whether a service corresponding to the URL path exists, to determine the target service type of the access request according to the parameter information when the authentication of the access request is successful.

6. The method according to any of claims 1 to 5, further comprising:
receiving the result information;
processing the result information, wherein processing comprises any one or more of data modification, compression, and masking; and
sending the processed result information to the client side to allow the client side to perform a corresponding operation according to the processed result information.

7. A computer-readable storage medium storing instructions which, when executed by a processor of a computing device, cause the computing device to perform the method according to any of the preceding claims.

8. An apparatus, wherein the apparatus comprises:
a receiving module (510) configured to receive an access request sent by a client side, the access request comprising a uniform resource locator, URL, and parameter information;
a determining module (520) configured to determine a target service type of the access request according to the URL and the parameter information;
a conversion module (530) configured to convert the access request according to the target service type;
a query module configured to query, according to the target service type, a server side configuration which corresponds to the target service type and is recorded in a failover component; and
a sending module (540) configured to send the access request converted according to the target service type to a server side corresponding to the target service type according the server side configuration to allow the server side to return result information according to the access request converted according to the target service type.

9. The apparatus according to claim 8, wherein the determining module (520) is further configured to:
perform predefined processing on the access request, the predefined processing comprising authentication of the access request; and
determine the target service type of the access request according to the URL and the parameter information when the authentication is successful.

10. The apparatus according to claim 9, wherein the determining module (520) is specifically configured to:
match authentication parameter information in the access request with token information of a token center, wherein
the authentication of the access request is successful when the authentication parameter information matches the token information.

11. The apparatus according to any of claims 8 to 10, wherein the determining module (520) is specifically configured to:
determine, according to the URL, whether a service corresponding to the URL path exists; and
determine the target service type of the access request according to the parameter information when a service corresponding to the URL path exists.

12. The apparatus according to claim 9, wherein the determining module (520) is configured to:
determine, according to the URL, whether a service corresponding to the URL path exists, and
determine the target service type of the access request according to the parameter information when the authentication of the access request is successful.

13. The apparatus according to any of claims 8 to 12, wherein t
he receiving module (510) is further configured to receive the result information;
and further comprising a handler component configured to process the result information, wherein the processing comprises any one or more of data modification, compression, and masking; and
the sending module (540) is further configured to send the processed result information to the client side to allow the client side to perform a corresponding operation according to the processed result information.

## Patentansprüche

1. Zugriffsanforderungskonvertierungsverfahren, umfassend:
Empfangen einer von einer Client-Seite gesendeten Zugriffsanforderung, wobei die Zugriffsanforderung einen einheitlichen Ressourcenanzeiger (URL) und Parameterinformationen umfasst;
Bestimmen einer Zieldienstart der Zugriffsanforderung gemäß der URL und den Parameterinformationen;
Konvertieren der Zugriffsanforderung gemäß der Zieldienstart;
Abfragen einer serverseitigen Konfiguration gemäß der Zieldienstart, die der Zieldienstart entspricht und in einer Ausfallsicherungskomponente aufgezeichnet ist; und
Senden der gemäß der Zieldienstart konvertierten Zugriffsanforderung an die Serverseite, die der Zieldienstart gemäß der serverseitigen Konfiguration entspricht, damit die Serverseite Ergebnisinformationen gemäß der Zugriffsanforderung zurückgeben kann, die gemäß der Zieldienstart konvertiert sind.

2. Verfahren nach Anspruch 1, wobei nach dem Schritt des Empfangens der von der Client-Seite gesendeten Zugriffsanforderung das Verfahren ferner umfasst:
Durchführen einer vordefinierten Verarbeitung für die Zugriffsanforderung, wobei die vordefinierte Verarbeitung die Authentifizierung der Zugriffsanforderung umfasst; und
Bestimmen der Zieldienstart der Zugriffsanforderung gemäß dem URL und der Parameterinformationen, wenn die Authentifizierung erfolgreich ist.

3. Verfahren nach Anspruch 2, wobei die Authentifizierung der Zugriffsanforderung umfasst: Abgleichen von Authentifizierungsparameterinformationen in der Zugriffsanforderung mit Token-Informationen eines Token-Centers,
wobei die Authentifizierung der Zugriffsanforderung erfolgreich ist, wenn die Authentifizierungsparameterinformationen mit den Token-Informationen übereinstimmen.

4. Verfahren nach einem der Ansprüche 1 bis 3, wobei der Schritt des Bestimmens der Zieldienstart der Zugriffsanforderung gemäß dem URL und den Parameterinformationen umfasst:
Bestimmen gemäß dem URL, ob ein Dienst vorhanden ist, der dem URL-Pfad entspricht; und
Bestimmen der Zieldienstart der Zugriffsanforderung gemäß den Parameterinformationen, wenn der dem URL-Pfad entsprechende Dienst vorhanden ist.

5. Verfahren nach Anspruch 2, wobei vor dem Schritt des Durchführens einer vordefinierten Verarbeitung an der Zugriffsanforderung das Verfahren umfasst:
Bestimmen gemäß der URL, ob ein Dienst vorhanden ist, der dem URL-Pfad entspricht, um die Zieldienstart der Zugriffsanforderung gemäß den Parameterinformationen zu bestimmen, wenn die Authentifizierung der Zugriffsanforderung erfolgreich ist.

6. Verfahren nach einem der Ansprüche 1 bis 5, ferner umfassend: Empfangen der Ergebnisinformationen;
Verarbeiten der Ergebnisinformationen, wobei die Verarbeitung eine beliebige oder mehrere beliebige der Datenmodifikationen, -komprimierungen und -maskierungen umfasst; und
Senden der verarbeiteten Ergebnisinformationen an die Client-Seite, damit die Client-Seite einen entsprechenden Vorgang gemäß den verarbeiteten Ergebnisinformationen durchführen kann.

7. Computerlesbares Speichermedium, das Anweisungen speichert, die, wenn sie von einem Prozessor einer Rechenvorrichtung ausgeführt werden, die Rechenvorrichtung veranlassen, das Verfahren nach einem der vorhergehenden Ansprüche durchzuführen.

8. Vorrichtung, wobei die Vorrichtung umfasst:
ein Empfangsmodul (510), das zum Empfangen einer von einer Client-Seite gesendeten Zugriffsanforderung konfiguriert ist, wobei die Zugriffsanforderung einen einheitlichen Ressourcenanzeiger (URL) und Parameterinformationen umfasst;
ein Bestimmungsmodul (520), das zum Bestimmen einer Zieldienstart der Zugriffsanforderung gemäß der URL und den Parameterinformationen konfiguriert ist;
ein Konvertierungsmodul (530), das zum Konvertieren der Zugriffsanforderung gemäß der Zieldienstart konfiguriert ist;
ein Abfragemodul, das zum Abfragen einer serverseitigen Konfiguration gemäß der Zieldienstart konfiguriert ist, die der Zieldienstart entspricht und in einer Ausfallsicherungskomponente aufgezeichnet ist; und
ein Sendemodul (540) zum Senden der gemäß der Zieldienstart konvertierten Zugriffsanforderung an eine Serverseite konfiguriert ist, die der Zieldienstart gemäß der serverseitigen Konfiguration entspricht, damit die Serverseite Ergebnisinformationen gemäß der Zugriffsanforderung zurückgeben kann, die gemäß der Zieldienstart konvertiert sind.

9. Vorrichtung nach Anspruch 8, wobei das Bestimmungsmodul (520) ferner konfiguriert ist zum:
Durchführen einer vordefinierten Verarbeitung für die Zugriffsanforderung, wobei die vordefinierte Verarbeitung die Authentifizierung der Zugriffsanforderung umfasst; und
Bestimmen der Zieldienstart der Zugriffsanforderung gemäß dem URL und der Parameterinformationen, wenn die Authentifizierung erfolgreich ist.

10. Vorrichtung nach Anspruch 9, wobei das Bestimmungsmodul (520) speziell konfiguriert ist zum:
Abgleichen von Authentifizierungsparameterinformationen in der Zugriffsanforderung mit Token-Informationen eines Token-Centers, wobei
die Authentifizierung der Zugriffsanforderung erfolgreich ist, wenn die Authentifizierungsparameterinformationen mit den Token-Informationen übereinstimmen.

11. Vorrichtung nach einem der Ansprüche 8 bis 10, wobei das Bestimmungsmodul (520) speziell konfiguriert ist zum:
Bestimmen gemäß dem URL, ob ein Dienst vorhanden ist, der dem URL-Pfad entspricht; und
Bestimmen der Zieldienstart der Zugriffsanforderung gemäß den Parameterinformationen, wenn ein dem URL-Pfad entsprechende Dienst vorhanden ist.

12. Vorrichtung nach Anspruch 9, wobei das Bestimmungsmodul (520) konfiguriert ist zum: Bestimmen gemäß dem URL, ob ein Dienst vorhanden ist, der dem URL-Pfad entspricht; und
Bestimmen der Zieldienstart der Zugriffsanforderung gemäß der Parameterinformationen, wenn die Authentifizierung der Zugriffsanforderung erfolgreich ist.

13. Vorrichtung nach einem der Ansprüche 8 bis 12, wobei
das Empfangsmodul (510) ferner zum Empfangen der Ergebnisinformationen; und ferner umfassend eine Handler-Komponente, die zum Verarbeiten der Ergebnisinformationen konfiguriert ist, wobei die Verarbeitung eine beliebige oder mehrere beliebige der Datenmodifikationen, -komprimierungen und -maskierungen umfasst; und
das Sendemodul (540) ferner zum Senden der verarbeiteten Ergebnisinformationen an die Client-Seite konfiguriert ist, damit die Client-Seite einen entsprechenden Vorgang gemäß den verarbeiteten Ergebnisinformationen durchführen kann.

## Revendications

1. Procédé de conversion de requête d'accès, comprenant :
la réception d'une requête d'accès envoyée par un côté client, la requête d'accès comprenant un localisateur de ressources uniforme (URL) et des informations de paramètres ;
la détermination d'un type de service cible de la requête d'accès selon l'URL et les informations de paramètre ;
la conversion de la requête d'accès selon le type de service cible ;
l'interrogation, selon le type de service cible, d'une configuration côté serveur qui correspond au type de service cible et est enregistrée dans un composant de basculement ; et
l'envoi de la requête d'accès convertie selon le type de service cible au côté serveur correspondant au type de service cible selon la configuration côté serveur pour permettre au côté serveur de renvoyer les informations de résultat selon la requête d'accès convertie selon le type de service cible.

2. Procédé selon la revendication 1, après l'étape de réception de la requête d'accès envoyée par le côté client, ledit procédé comprenant en outre :
la réalisation du traitement prédéfini sur la requête d'accès, le traitement prédéfini comprenant l'authentification de la requête d'accès ; et
la détermination du type de service cible de la requête d'accès selon l'URL et les informations de paramètre lorsque l'authentification est réussie.

3. Procédé selon la revendication 2, ladite authentification de la requête d'accès comprenant : la mise en correspondance des informations de paramètre d'authentification dans la requête d'accès avec les informations de jeton d'un centre de jetons,
ladite authentification de la requête d'accès étant réussie lorsque les informations de paramètre d'authentification correspondent aux informations de jeton.

4. Procédé selon l'une quelconque des revendications 1 à 3, ladite étape de détermination du type de service cible de la requête d'accès selon l'URL et les informations de paramètre comprenant :
la détermination, selon l'URL, pour savoir si un service correspondant au chemin URL existe ; et
la détermination du type de service cible de la requête d'accès selon les informations de paramètre lorsque le service correspondant au chemin URL existe.

5. Procédé selon la revendication 2, avant l'étape de réalisation d'un traitement prédéfini sur la requête d'accès, ledit procédé comprenant :
la détermination, selon l'URL, pour savoir si un service correspondant au chemin URL existe, pour déterminer le type de service cible de la requête d'accès selon les informations de paramètre lorsque l'authentification de la requête d'accès est réussie.

6. Procédé selon l'une quelconque des revendications 1 à 5, comprenant en outre :
la réception des informations de résultat ;
le traitement des informations de résultat, ledit traitement comprenant l'une quelconque ou plusieurs des modifications, compressions et masquages de données ; et
l'envoi des informations de résultat traitées au côté client pour permettre au côté client d'effectuer une opération correspondante selon les informations de résultat traitées.

7. Support de stockage lisible par ordinateur stockant des instructions qui, lorsqu'elles sont exécutées par un processeur d'un dispositif informatique, amènent le dispositif informatique à effectuer le procédé selon l'une quelconque des revendications précédentes.

8. Appareil, ledit appareil comprenant :
un module de réception (510) configuré pour recevoir une requête d'accès envoyée par un côté client, la requête d'accès comprenant un localisateur de ressources uniforme (URL) et des informations de paramètre ;
un module de détermination (520) configuré pour déterminer un type de service cible de la requête d'accès selon l'URL et les informations de paramètre ;
un module de conversion (530) configuré pour convertir la requête d'accès selon le type de service cible ;
un module d'interrogation configuré pour interroger, selon le type de service cible, une configuration côté serveur qui correspond au type de service cible et est enregistrée dans un composant de basculement ; et
un module d'envoi (540) configuré pour envoyer la requête d'accès convertie selon le type de service cible à un côté serveur correspondant au type de service cible selon la configuration côté serveur pour permettre au côté serveur de renvoyer des informations de résultat selon la requête d'accès convertie selon le type de service cible.

9. Appareil selon la revendication 8, ledit module de détermination (520) étant en outre configuré pour :
effectuer un traitement prédéfini sur la requête d'accès, le traitement prédéfini comprenant l'authentification de la requête d'accès ; et
déterminer le type de service cible de la requête d'accès selon l'URL et les informations de paramètre lorsque l'authentification est réussie.

10. Appareil selon la revendication 9, ledit module de détermination (520) étant spécifiquement configuré pour :
faire correspondre les informations de paramètre d'authentification dans la requête d'accès avec les informations de jeton d'un centre de jetons,
ladite authentification de la requête d'accès étant réussie lorsque les informations de paramètre d'authentification correspondent aux informations de jeton.

11. Appareil selon l'une quelconque des revendications 8 à 10, ledit module de détermination (520) étant spécifiquement configuré pour :
déterminer, selon l'URL, si un service correspondant au chemin URL existe ; et
déterminer le type de service cible de la requête d'accès en selon les informations de paramètre lorsqu'un service correspondant au chemin URL existe.

12. Appareil selon la revendication 9, ledit module de détermination (520) étant configuré pour : déterminer, selon l'URL, si un service correspondant au chemin URL existe, et
déterminer le type de service cible de la requête d'accès selon les informations de paramètre lorsque l'authentification de la requête d'accès est réussie.

13. Appareil selon l'une quelconque des revendications 8 à 12,
ledit module de réception (510) étant en outre configuré pour recevoir les informations de résultat ; et comprenant en outre un composant gestionnaire configuré pour traiter les informations de résultat, ledit traitement comprenant l'une quelconque ou plusieurs des modifications, compressions et masquages de données ; et
ledit module d'envoi (540) étant en outre configuré pour envoyer les informations de résultat traitées au côté client pour permettre au côté client d'effectuer une opération correspondante selon les informations de résultat traitées.
